# EUROPÄISCHE PATENTSCHRIFT

(11) **EP 3 524 890 B1**
(45) Veröffentlichungstag und Bekanntmachung des Hinweises auf die Patenterteilung: **05.05.2021**
(21) Anmeldenummer: 18207476.5
(22) Anmeldetag: 21.11.2018
(51) Int. Cl.: F24C 15/20, F16B 5/07

(54) **DUNSTABZUGSHAUBENSYSTEM**
HOOD SYSTEM
SYSTÈME DE HOTTE ASPIRANTE

(30) Priorität: 15.12.2017 DE 102017130069
(43) Veröffentlichungstag der Anmeldung: 14.08.2019
(73) Patentinhaber: Miele & Cie. KG, 33332 Gütersloh (DE)
(72) Erfinder: Robbert, Andreas, 59469 Ense-Lüttringen (DE); Eckardt, Gerd, 59846 Sundern (DE); Schüsseler, Dirk, 59821 Arnsberg (DE)

(56) Entgegenhaltungen:
- EP-A1- 1 593 421
- EP-A1- 2 546 578
- EP-A2- 2 161 506
- WO-A1-99/07974
- DE-C- 911 925
- US-A1- 2007 056 578

## Beschreibung

Die Erfindung betrifft ein Dunstabzugshaubensystem mit einer Dunstabzugshaube und einem Filter.

Zum Befestigen eines Fettfilters an einer Dunstabzugshaube sind verschiedene Befestigungsmöglichkeiten bekannt. Es gibt Dunstabzugshauben, die Flächen mit Konturlöchern aufweisen, die als Anschlag bzw. Aufnahme von Schnäppern dienen, um den Fettfilter an der Dunstabzugshaube zu befestigen,

Die Druckschrift EP 2161506 A2 zeigt eine Dunstabzugshaube mit einem eine Ansaugöffnung aufweisenden Gehäuse und mindestens einem in der Ansaugöffnung angeordneten Fettfilter. Dabei ist mindestens eine Lagerstelle für das Fettfilter vorgesehen, in der das Fettfilter zumindest in vertikaler Richtung relativ zum Gehäuse festgelegt ist. Die Lagerstelle ermöglicht eine begrenzte Schwenkbewegung des Flächenelements relativ zum Gehäuse nach unten. Aus der Druckschrift DE 911925 C ist eine Vorrichtung zur Arretierung eines Deckels einer Motorhaube eines Automobils in offener Stellung bekannt.

Die Druckschrift US 2007056578 A1 lehrt die lösbare Verbindung zweier Teile eines Filterelements für eine Dunstabzugshaube. Die Druckschriften EP 2 546 578 A1 und EP 1 593 421 A1 zeigen weitere Dunstabzugshaubensysteme.

Die Druckschrift WO 9907974 A1 zeigt eine Abschirmeinrichtung für ein Gebäudefenster, beispielsweise ein Rollo. Der Erfindung liegt die Aufgabe zugrunde, ein Dunstabzugshaubensystem mit einer verbesserten Dunstabzugshaube und einem verbesserten Filter zu schaffen,

Erfindungsgemäß wird diese Aufgabe durch ein Dunstabzugshaubensystem mit einer Dunstabzugshaube und einem Filter mit den Merkmalen des Hauptanspruchs gelöst, Vorteilhafte Ausgestaltungen und Weiterbildungen des Ansatzes ergeben sich aus den abhängigen Ansprüchen.

Die mit dem hier vorgestellten Ansatz erreichbaren Vorteile bestehen darin, dass eine hier vorgestellte Aufnahmevorrichtung an einer beliebigen Dunstabzugshaube zur Aufnahme eines Filters fixiert werden kann. Auch können unter Verwendung von mehreren der Aufnahmevorrichtungen mehrere nebeneinander angeordnete Filter an der Dunstabzugshaube fixiert werden.

Eine Aufnahmevorrichtung für eine Dunstabzugshaube ist dazu ausgeformt, um an der Dunstabzugshaube fixierbar zu sein und, um ein Befestigungselement eines Filters aufzunehmen. Die Aufnahmevorrichtung weist eine Nut,
eine Aufnahmeausnehmung und ein Halteelement auf.

Durch die Nut ist ein Fortsatz des an dem Filter befestigten
oder befestigbaren Befestigungselements des Filters entlang einer Vorschubrichtung durchführbar. Die Aufnahmeausnehmung ist mit der Nut verbunden und dazu ausgeformt, um den Fortsatz nach dem Durchführen in einer Befestigungsstellung aufzunehmen, in der das Befestigungselement in der Aufnahmevorrichtung befestigt ist. Das Halteelement ist der Aufnahmeausnehmung in Vorschubrichtung vorgelagert und dazu ausgeformt, um den in der Aufnahmeausnehmung aufgenommenen Fortsatz in der Befestigungsstellung zu halten.

Die hier vorgestellte Aufnahmevorrichtung kann als ein einstückiges Kunststoffelement ausgeformt sein und beispielsweise mittels eines Spritzgussverfahrens hergestellt worden oder herstellbar sein. Der Filter kann ein Fettfilter sein. In der Befestigungsstellung kann das Befestigungselement in der Aufnahmevorrichtung zumindest teilweise eingeklemmt und/oder formschlüssig begrenzt angeordnet sein.

Die hier vorgestellte Aufnahmevorrichtung schafft eine sichere und einfach montierbare Befestigungsmöglichkeit zum Befestigen eines Fettfilters an einer
Dunstabzugshaube. Die Aufnahmeausnehmung kann quer zu der Nut verlaufend angeordnet sein, insbesondere wobei die Aufnahmeausnehmung gebogen ausgeformt sein kann. Beispielsweise kann die Aufnahmeausnehmung um 5° bis 25°, insbesondere 15°entgegen der Vorschubrichtung gebogen ausgeformt sein.

Somit ist ein eigenständiges bzw. ungewolltes Zurückführen des Fortsatzes aus
der Aufnahmeausnehmung heraus formbedingt und/oder schwerkraftbedingt verhindert. Die Aufnahmevorrichtung weist gemäß der Erfindung eine Einführöffnung aus, die dazu ausgeformt ist, um den Fortsatz von außerhalb der Aufnahmevorrichtung in die Nut einzuführen, wobei die Einführöffnung quer zu der Nut angeordnet ist.

Nicht erfindungsgemäß kann die Einführöffnung senkrecht zu der Nut angeordnet sein. Aus einer solchen Position der Einführöffnung ist ein ungewolltes Herausbewegen oder Herausfallen der Befestigungseinrichtung aus der Einführöffnung unmöglich.

Von Vorteil ist es weiterhin, dass die Aufnahmevorrichtung im Bereich
der Einführöffnung einen Anschlagabschnitt ausformt, der dazu ausgeformt ist, um ein Herausgleiten des Fortsatzes entgegen der Vorschubrichtung aus der Nut heraus zu verhindern. Der Anschlagabschnitt kann hierzu an eine Wand der Nut angrenzen, um das Herausgleiten oder Herausfallen des Fortsatzes, beispielsweise beim Entfernen des Befestigungselements aus der Aufnahmevorrichtung, entgegen der Vorschubrichtung aus der Nut heraus formschlüssig zu verhindern.

Gemäß einer weiteren vorteilhaften Ausführungsform weist die Aufnahmevorrichtung außerdem eine dem Halteelement in Vorschubrichtung vorgelagerte und mit der Nut verbundene weitere Aufnahmeausnehmung auf, die dazu ausgeformt ist, um in der Befestigungsstellung des Befestigungselements einen Schulterabschnitt des Befestigungselements aufzunehmen. Diese weitere Aufnahmeausnehmung ermöglicht, dass auch der Schulterabschnitt des Befestigungselements beim Bewegen des Befestigungselements in die Befestigungsstellung in der Aufnahmevorrichtung bewegt und dabei formschlüssig begrenzt werden kann. Beispielsweise kann die weitere Aufnahmeausnehmung hierzu winkelförmig ausgeformt sein.

Eine Tiefe der Aufnahmeausnehmung kann einer Tiefe der Nut entsprechen und/oder die Tiefe der Aufnahmeausnehmung kann größer sein, als eine weitere Tiefe der weiteren Aufnahmeausnehmung und/oder eine Höhe des Halteelements kann kleiner sein als zumindest eine Tiefe einer Seitenwand der Nut. Eine derartige Ausformung der Aufnahmeausnehmungen und der Nut schafft eine formschlüssige und stabile Aufnahmemöglichkeit für ein Befestigungselement, bei dem sich entsprechend auch eine Größe des Fortsatzes von einer weiteren Größe des Schulterabschnitts und/oder einer zusätzlichen Größe eines Halsabschnitts des Befestigungselements unterscheidet.

Die Aufnahmevorrichtung kann zum Befestigen an der Dunstabzugshaube eine Durchgangsöffnung zum Aufnehmen eines Fixierelements ausformen, insbesondere wobei die Durchgangsöffnung quer zu der Nut verlaufend angeordnet sein kann. Durch eine solche Durchgangsöffnung kann beispielsweise eine Schraube in die Durchgangsöffnung aufnehmbar sein, um die Aufnahmevorrichtung mittels der Schraube an die Dunstabzugshaube schrauben zu können.

Ein Befestigungselement mit einem Fortsatz ist zur Aufnahme in eine der zuvor vorgestellten Aufnahmevorrichtungen ausgeformt, wobei das Befestigungselement an dem Filter fixiert oder fixierbar ist.

Das Befestigungselement ist als ein Winkelelement mit einer Aufnahmefläche zur Aufnahme in die Aufnahmevorrichtung und einer Fixierfläche zum Fixieren an dem Filter ausgeformt, wobei ein Winkel zwischen der Aufnahmefläche und der Fixierfläche 65° bis 85°, insbesondere 75°, betragen kann. Bei dem Winkelelement kann es sich um einen Blechwinkel handeln. Ein solches Winkelelement ist dazu ausgeformt, um vonseiten der Aufnahmefläche in der Aufnahmevorrichtung befestigt zu werden. Gemäß einer vorteilhaften Ausführungsform formt die Aufnahmefläche des Winkelelements an einem freien

Ende den Fortsatz und/oder einen Schulterabschnitt und/oder einen zwischen dem Fortsatz und dem Schulterabschnitt angeordneten Halsabschnitt aus, insbesondere wobei sich eine Fortsatzbreite des Fortsatzes von einer Halsbreite des Halsabschnitts und/oder einer Schulterbreite des Schulterabschnitts und/oder die Halsbreite von der Schulterbreite unterscheiden kann.

Ein derartiges Befestigungselement ist zur sicheren und stabilen Aufnahme in der Aufnahmevorrichtung ausgeformt. Beispielsweise kann die Fortsatzbreite größer sein als die Halsbreite und/oder die Schulterbreite. Die Halsbreite kann kleiner sein als die Schulterbreite. Ein Befestigungssystem weist eine der vorgestellten Aufnahmevorrichtungen und eines der vorgestellten Befestigungselemente auf. Ein solches Befestigungssystem ist vorteilhafterweise dazu ausgeformt, um einen beliebigen Filter an einer beliebigen Dunstabzugshaube befestigen zu können. Eine Dunstabzugshaube weist eine der vorgestellten Aufnahmevorrichtungen auf, wobei die Aufnahmevorrichtung an der Dunstabzugshaube fixiert oder fixierbar ist. Eine solche Dunstabzugshaube ermöglicht eine Aufnahme eines Filters mit einem der vorgestellten Befestigungselemente. Die Dunstabzugshaube kann auch eine Mehrzahl der Aufnahmevorrichtungen aufweisen, um eine Mehrzahl der Filter mit Befestigungselementen aufnehmen zu können. So können beispielsweise mehrere Filter nebeneinander an der Dunstabzugshaube angeordnet werden. Ein Filter weist eines der vorgestellten Befestigungselemente auf, wobei das Befestigungselement an dem Filter fixiert oder fixierbar ist. Ein solcher Filter kann in der zuvor vorgestellte Dunstabzugshaube befestigt werden. Der Filter kann auch mehrere der Befestigungselemente aufweisen, um so an mehreren Stellen in Verbindung mit mehreren Aufnahmevorrichtungen an der Dunstabzugshaube befestigbar zu sein.
Das erfindungsgemäße Dunstabzugshaubensystem weist die vorgestellte Dunstabzugshaube und zumindest einen der vorgestellten Filter auf.

Ein solches Dunstabzugshaubensystem kann als Ersatz für
bekannte Dunstabzugshaubensysteme dienen. Ausführungsbeispiele des Ansatzes sind in den Zeichnungen rein schematisch dargestellt und werden nachfolgend näher beschrieben. Es zeigt
- Figur 1 eine perspektivische Darstellung einer Aufnahmevorrichtung zum Aufnehmen eines Befestigungselements eines Filters für eine Dunstabzugshaube und des Filters gemäß einem Ausführungsbeispiel;
- Figur 2 eine perspektivische Darstellung einer Aufnahmevorrichtung gemäß einem Ausführungsbeispiel;
Figur 3 eine perspektivische Darstellung einer Aufnahmevorrichtung und eines Filters gemäß einem Ausführungsbeispiel;
Figur 4 eine perspektivische Darstellung einer Aufnahmevorrichtung und eines Filters gemäß einem Ausführungsbeispiel;
Figur 5 eine seitliche Querschnittdarstellung eines Dunstabzugshaubensystems mit einer Dunstabzugshaube und einem Filter gemäß einem Ausführungsbeispiel;
Figur 6 eine seitliche Querschnittdarstellung eines Ausschnitts eines Dunstabzugshaubensystems gemäß einem Ausführungsbeispiel;
Figur 7 eine seitliche Querschnittdarstellung einer Dunstabzugshaube mit einer Aufnahmevorrichtung gemäß einem Ausführungsbeispiel;
Figur 8 eine seitliche Querschnittdarstellung eines Filters mit einem Befestigungselement gemäß einem Ausführungsbeispiel; und
Figur 9 ein Befestigungselement mit einem Fortsatz zur Aufnahme in eine Aufnahmevorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

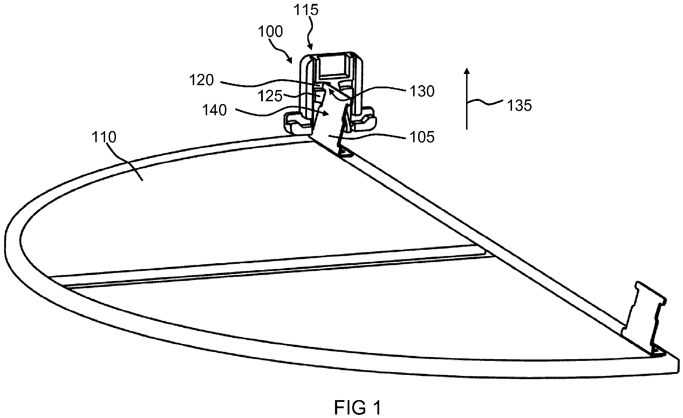

Figur 1 zeigt eine perspektivische Darstellung einer Aufnahmevorrichtung 100 zum Aufnehmen eines Befestigungselements 105 eines Filters 110 für eine Dunstabzugshaube und des Filters 110 gemäß einem Ausführungsbeispiel.

Die Aufnahmevorrichtung 100 ist dazu ausgeformt, um an der Dunstabzugshaube fixierbar zu sein und, um das Befestigungselement 105 des Filters 110 aufzunehmen. Gemäß diesem Ausführungsbeispiel ist das Befestigungselement 105 an dem Filter 110 fixiert. Die Aufnahmevorrichtung 100 weist eine Nut 115, eine Aufnahmeausnehmung 120 und ein Halteelement 125 auf. Durch die Nut 115 ist ein Fortsatz 130 des an dem Filter 110 befestigten oder befestigbaren Befestigungselements 105 des Filters 110 entlang einer Vorschubrichtung 135 durchführbar. Die Aufnahmeausnehmung 120 ist mit der Nut 115 verbunden und dazu ausgeformt, um den Fortsatz 130 nach dem Durchführen in einer Befestigungsstellung 140 aufzunehmen, in der das Befestigungselement 105 in der Aufnahmevorrichtung 115 befestigt ist. Das Halteelement 125 ist der Aufnahmeausnehmung 120 in Vorschubrichtung 135 vorgelagert und dazu ausgeformt, um den in der Aufnahmeausnehmung 120 aufgenommenen Fortsatz 130 in der Befestigungsstellung 140 zu halten. Gemäß diesem Ausführungsbeispiel ist das Befestigungselement 105 in der Befestigungsstellung 140 in der Aufnahmevorrichtung 100 angeordnet.

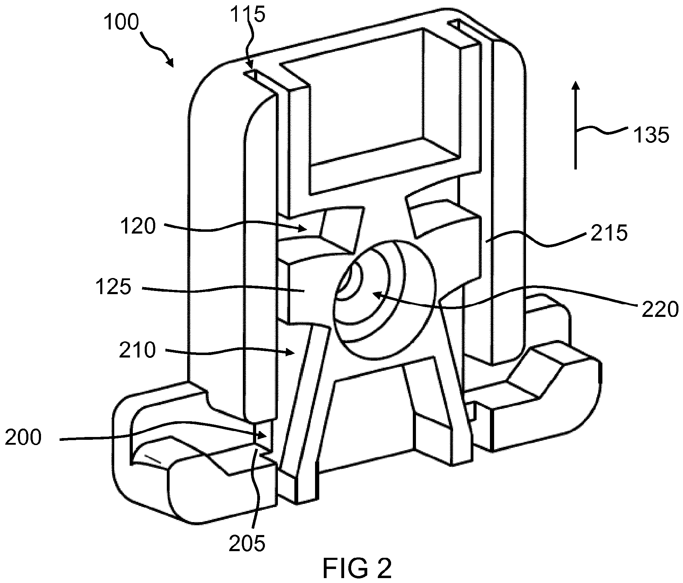

Figur 2 zeigt eine perspektivische Darstellung einer Aufnahmevorrichtung 100 gemäß einem Ausführungsbeispiel. Dabei kann es sich um die anhand von Figur 1 beschriebene Aufnahmevorrichtung 100 handeln.

Die Aufnahmeausnehmung 120 ist gemäß diesem Ausführungsbeispiel quer zu der Nut 115 verlaufend angeordnet, wobei die Aufnahmeausnehmung 120 gemäß diesem Ausführungsbeispiel gebogen ausgeformt ist.

Die Aufnahmevorrichtung 100 weißt gemäß diesem Ausführungsbeispiel eine Einführöffnung 200 auf, die dazu ausgeformt ist, um den Fortsatz von außerhalb der Aufnahmevorrichtung 100 in die Nut 115 einzuführen, wobei die Einführöffnung 200 gemäß diesem Ausführungsbeispiel an einem der Aufnahmeausnehmung 120 gegenüberliegenden Ende der Nut 115 und/oder quer zu der Nut 115 angeordnet ist.

Im Bereich der Einführöffnung 200 formt die Aufnahmevorrichtung 100 zudem gemäß diesem Ausführungsbeispiel einen Anschlagabschnitt 205 aus, der dazu ausgeformt ist, um ein Herausgleiten des Fortsatzes entgegen der Vorschubrichtung 135 aus der Nut 115 heraus zu verhindern.

Die Aufnahmevorrichtung 100 weist außerdem gemäß diesem Ausführungsbeispiel eine dem Halteelement 125 in Vorschubrichtung 135 vorgelagerte und mit der Nut 115 verbundene weitere Aufnahmeausnehmung 210 auf, die dazu ausgeformt ist, um in der Befestigungsstellung des Befestigungselements einen Schulterabschnitt des Befestigungselements aufzunehmen.

Eine Tiefe der Aufnahmeausnehmung 120 entspricht gemäß diesem Ausführungsbeispiel einer Tiefe der Nut 115 und/oder die Tiefe der Aufnahmeausnehmung 120 ist gemäß diesem Ausführungsbeispiel größer, als eine weitere Tiefe der weiteren Aufnahmeausnehmung 210 und/oder eine Höhe des Halteelements 125 ist gemäß diesem Ausführungsbeispiel kleiner als zumindest eine Tiefe einer Seitenwand 215 der Nut 115.

Gemäß diesem Ausführungsbeispiel formt die Aufnahmevorrichtung 100 zum Befestigen an der Dunstabzugshaube eine Durchgangsöffnung 220 zum Aufnehmen eines Fixierelements aus. Die Durchgangsöffnung 220 ist gemäß diesem Ausführungsbeispiel quer zu der Nut 115 verlaufend angeordnet.

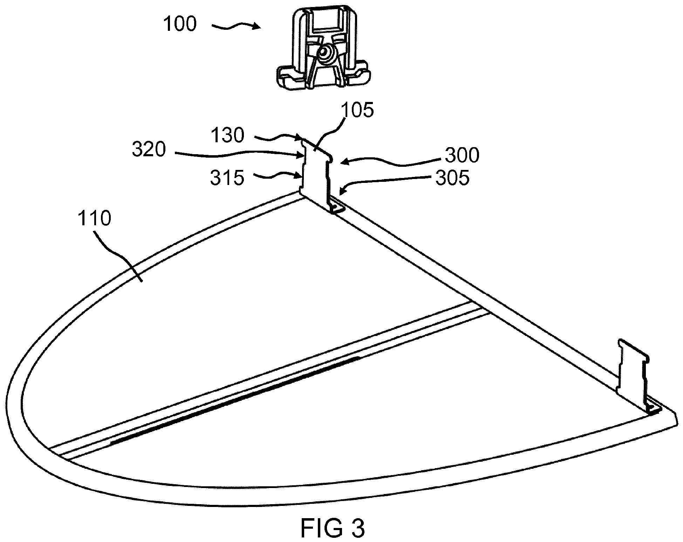

Figur 3 zeigt eine perspektivische Darstellung einer Aufnahmevorrichtung 100 und eines Filters 110 gemäß einem Ausführungsbeispiel. Dabei kann es sich um den anhand von Figur 1 beschriebenen Filter 110 und die anhand von Figur 2 beschriebene Aufnahmevorrichtung 100 handeln, mit dem Unterschied, dass das Befestigungselement 105 gemäß diesem Ausführungsbeispiel nicht in der Aufnahmevorrichtung 100 aufgenommen ist.

Das Befestigungselement 105 weist zumindest den Fortsatz 130 zur Aufnahme in die Aufnahmevorrichtung 100 auf. Gemäß diesem Ausführungsbeispiel ist das Befestigungselement 105 als ein Winkelelement mit einer Aufnahmefläche 300 und einer Fixierfläche 305 ausgeformt, wobei ein Winkel zwischen der Aufnahmefläche 300 und der Fixierfläche 305 65° bis 85°, gemäß diesem Ausführungsbeispiel 75°, beträgt. Die Fixierfläche 305 ist gemäß diesem Ausführungsbeispiel an dem Filter 110 fixiert, wobei sich die Aufnahmefläche 300 von dem Filter 110 weg erstreckt.

Die Aufnahmefläche 300 des Winkelelements formt an einem freien Ende den Fortsatz 130 aus und/oder einen Schulterabschnitt 315 und/oder einen zwischen dem Fortsatz 130 und dem Schulterabschnitt 315 angeordneten Halsabschnitt 320 aus, wobei sich gemäß diesem Ausführungsbeispiel eine Fortsatzbreite des Fortsatzes 130 von einer Halsbreite des Halsabschnitts 320 und/oder einer Schulterbreite des Schulterabschnitts 315 und/oder die Halsbreite von der Schulterbreite unterscheidet.

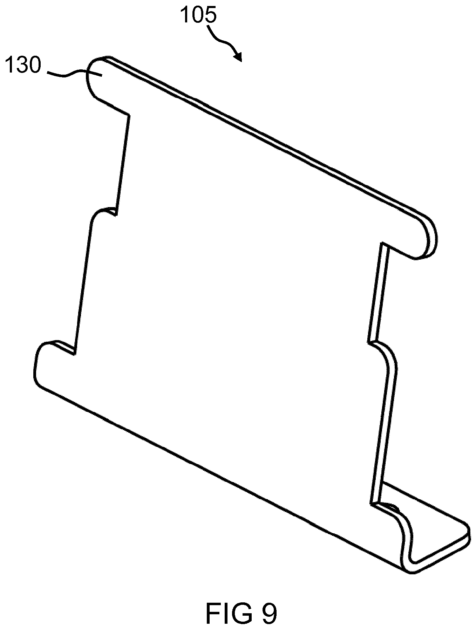

Gemäß diesem Ausführungsbeispiel ist die Fortsatzbreite größer als die Halsbreite und die die Schulterbreite. Die Schulterbreite ist gemäß diesem Ausführungsbeispiel größer als die Halsbreite. Das hier beschriebene Befestigungselement 105 ist in Fig. 9 größer dargestellt.

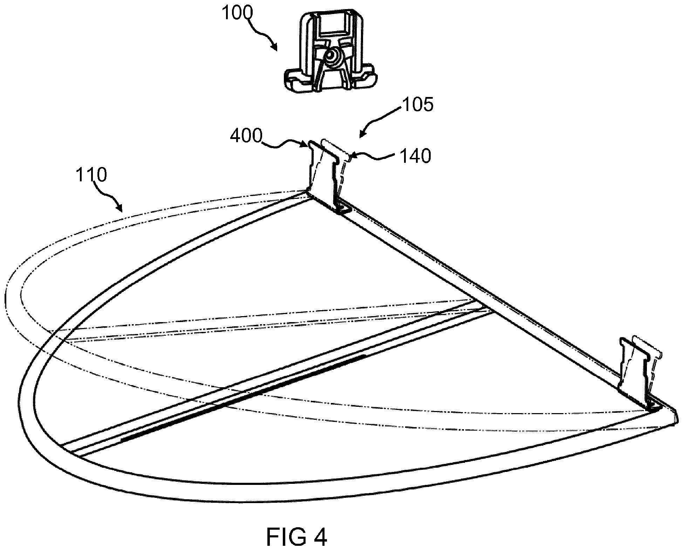

Figur 4 zeigt eine perspektivische Darstellung einer Aufnahmevorrichtung 100 und eines Filters 110 gemäß einem Ausführungsbeispiel.

Dabei kann es sich um die anhand von Figur 3 beschriebene Aufnahmevorrichtung 100 und den Filter 110 handeln. Gegenübergestellt ist in Fig. 4 eine Anordnung des Filters 110, wenn das Befestigungselement 105 in der Befestigungsstellung 140 angeordnet ist und eine weitere Anordnung des Filters 110, wenn das Befestigungselement 105 in einer Montagestellung 400 angeordnet ist, in der das Befestigungselement 105 in die Aufnahmevorrichtung 100 vor Erreichen der Befestigungsstellung 140 eingeführt wird.

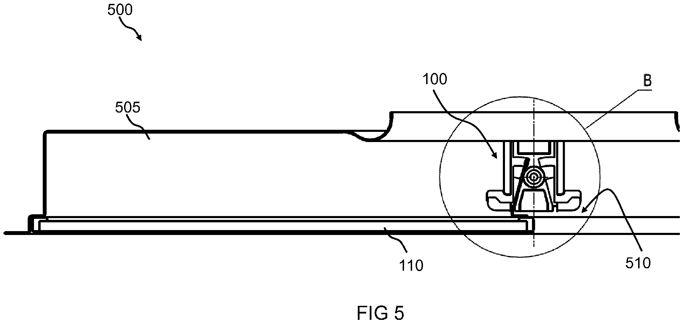

Figur 5 zeigt eine seitliche Querschnittdarstellung eines Dunstabzugshaubensystems 500 mit einer Dunstabzugshaube 505 und einem Filter 110 gemäß einem Ausführungsbeispiel. Bei dem Filter 110 kann es sich um den in Figur 3 beschriebenen Filter 110 mit dem Befestigungselement 105 handeln. Die Dunstabzugshaube 505 weist die Aufnahmevorrichtung 100 auf, die gemäß diesem Ausführungsbeispiel an der Dunstabzugshaube 505 fixiert oder gemäß einem alternativen Ausführungsbeispiel fixierbar ist.

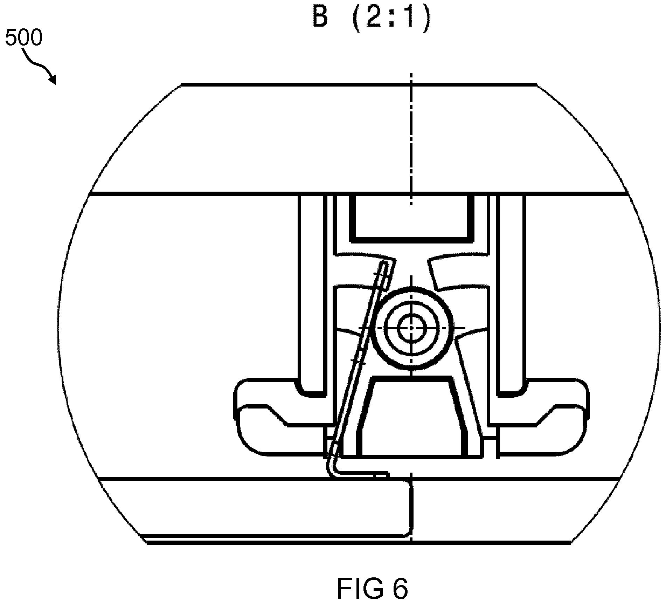

Das Befestigungselement ist in der Befestigungsstellung in der Aufnahmevorrichtung 100 aufgenommen und der Filter 110 somit in einer betriebsbereiten Position an der Dunstabzugshaube 505 befestigt. Ein Ausschnitt B des Dunstabzugshaubensystems 500 ist in Fig. 6 größer dargestellt.

Im Folgenden werden Ausführungsbeispiele anhand der Figur 5 nochmals mit anderen Worten beschrieben:
Die hier vorgestellte Aufnahmevorrichtung 100 ermöglicht eine Befestigung eines Fettfilters.

Eine Aufnahme in Form der Aufnahmevorrichtung 100, gemäß diesem Ausführungsbeispiel ist die Aufnahmevorrichtung 100 aus Kunststoff ausgeformt, ist über dem Filter 110, der gemäß diesem Ausführungsbeispiel ein Fettfilter ist, in einem hinteren Bereich der Dunstabzugshaube 505 angebracht. Die Aufnahmevorrichtung 100, die auch als "KS-Teil" bezeichnet werden kann, weist Konturen für die Aufnahme des Fettfilters 110 auf. Auf dem Fettfilter befindet sich gemäß diesem Ausführungsbeispiel dauerhaft das Befestigungselement, welches gemäß diesem Ausführungsbeispiel als ein Blechwinkel ausgeformt ist.

Der Fettfilter ist unter einem bestimmten Winkel senkrecht in die Aufnahmevorrichtung 100 geschoben worden. Durch Anheben des Fettfilters in einem vorderen Bereich des Fettfilters hat sich der Blechwinkel anschließend verdreht und ist somit in einen Hinterschnitt in Form der Aufnahmeausnehmung gelangt. Der Fettfilter ist nun in der hier gezeigten Befestigungsstellung gegen Herausfallen im hinteren Bereich gesichert. Durch eine spezielle Kontur des Hinterschnitts wird der Fettfilter nochmals ein wenig angehoben und an einen oberen Anschlag 510, auch Saugsatz genannt, gezogen.

Dank der hier vorgestellten Aufnahmevorrichtung 100 sind vorteilhafterweise keine rückseitigen Anschlagsflächen oder Bauteile oder angrenzende Flächen mit Konturlöchern nötig, um den Fettfilter aufzunehmen. Der Fettfilter kann nicht aus der Aufnahmekontur der Aufnahmevorrichtung 100 rutschen. In der hier gezeigten Befestigungsstellung wird der Fettfilter zudem durch starke Haltekräfte in der Aufnahmevorrichtung 100 gehalten.

Figur 6 zeigt eine seitliche Querschnittdarstellung eines Ausschnitts B eines Dunstabzugshaubensystems 500 gemäß einem Ausführungsbeispiel. Dabei kann es sich um den in Fig. 5 gezeigten Ausschnitt B in vergrößerter Darstellung handeln.

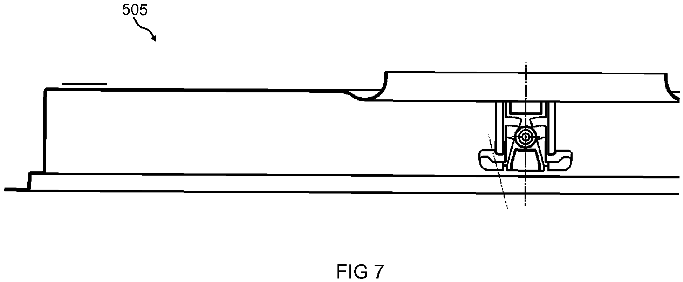

Figur 7 zeigt eine seitliche Querschnittdarstellung einer Dunstabzugshaube 505 mit einer Aufnahmevorrichtung 100 gemäß einem Ausführungsbeispiel. Dabei kann es sich um die in Fig. 5 vorgestellte Dunstabzugshaube 505 handeln.

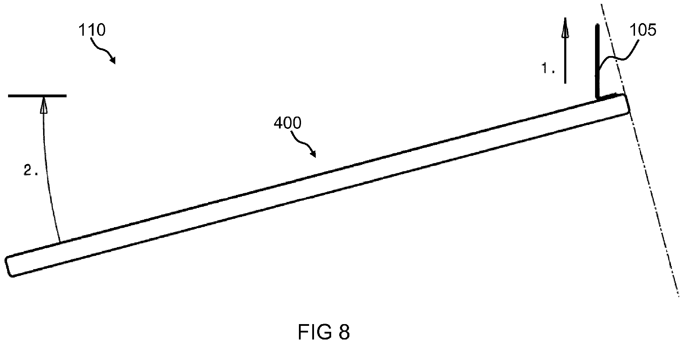

Figur 8 zeigt eine seitliche Querschnittdarstellung eines Filters 110 mit einem Befestigungselement 105 gemäß einem Ausführungsbeispiel. Dabei kann es sich um einen der anhand einer der Figuren 3 bis 7 beschrieben Filter 110 handeln, der gemäß diesem Ausführungsbeispiel in der in Fig. 4 beschriebenen Montagestellung 400 angeordnet ist.

Figur 9 zeigt ein Befestigungselement 105 mit einem Fortsatz 130 zur Aufnahme in eine Aufnahmevorrichtung gemäß einem Ausführungsbeispiel. Dabei kann es sich um eines der anhand einer der Figuren 3 bis 7 beschrieben Befestigungselemente 105 handeln.

## Patentansprüche

1. Dunstabzugshaubensystem (500) mit einer Dunstabzugshaube (505) und einem Filter (110),
wobei die Dunstabzugshaube (505) eine Aufnahmevorrichtung (100) aufweist, welche an der Dunstabzugshaube (505) fixiert ist, wobei das Filter (110) ein Befestigungselement (105) aufweist, welches an dem Filter (110) fixiert ist, wobei das Befestigungselement (105) als ein Winkelelement mit einer Aufnahmefläche (300) und einer Fixierfläche (305) ausgeformt ist,
**dadurch gekennzeichnet, dass**
ein Winkel zwischen der Aufnahmefläche (300) und der Fixierfläche (305) 65° bis 85° beträgt, das Befestigungselement (105) mit einem Fortsatz (130) zur Aufnahme in der Aufnahmevorrichtung (100) ausgeformt ist, der Fortsatz (130) an einem freien Ende der Aufnahmefläche (300) zur Führung durch eine Nut (115) der Aufnahmevorrichtung (100) entlang einer Vorschubrichtung (135) ausgeformt ist, die Aufnahmevorrichtung (100) für die Aufnahme des Befestigungselements (105) eingerichtet und ausgelegt ist und zumindest die folgenden Merkmale aufweist:
- eine Nut (115), durch die ein Fortsatz (130) des an dem Filter (110) befestigten oder befestigbaren Befestigungselements (105) des Filters (110) entlang einer Vorschubrichtung (135) durchführbar ist;
- eine mit der Nut (115) verbundene Aufnahmeausnehmung (120), die dazu ausgeformt ist, um den Fortsatz (130) nach dem Durchführen in einer Befestigungsstellung (140) aufzunehmen, in der das Befestigungselement (105) in der Aufnahmevorrichtung (100) befestigt ist
- ein der Aufnahmeausnehmung (120) in Vorschubrichtung (135) vorgelagertes Halteelement (125), das dazu ausgeformt ist, um den in
der Aufnahmeausnehmung (120) aufgenommenen Fortsatz (130) in der Befestigungsstellung (140) zu halten; und
- eine Einführöffnung (200), die dazu ausgeformt ist, um den Fortsatz (130) von außerhalb der Aufnahmevorrichtung (100) in die Nut (115) einzuführen;
- die Einführöffnung (200) quer zu der Nut (115) angeordnet ist; und
- einen Anschlagabschnitt (205) im Bereich der Einführöffnung (200), welcher dazu ausgeformt ist, um ein Herausgleiten des Fortsatzes (130) entgegen der Vorschubrichtung (135) aus der Nut (115) heraus zu verhindern.

2. Dunstabzugshaubensystem (500) nach Anspruch 1, bei der die Aufnahmeausnehmung (120) quer zu der Nut (115) verlaufend angeordnet ist, insbesondere wobei die Aufnahmeausnehmung (120) gebogen ausgeformt ist.

3. Dunstabzugshaubensystem (500) nach einem der vorangegangenen Ansprüche, wobei die Einführöffnung (200) an einem der Aufnahmeausnehmung (120) gegenüberliegenden Ende der Nut (115) angeordnet ist.

4. Dunstabzugshaubensystem (500) nach einem der vorangegangenen Ansprüche, wobei die Aufnahmevorrichtung (100) mit einer dem Halteelement (125) in Vorschubrichtung (135) vorgelagerten und mit der Nut (115) verbundenen weiteren Aufnahmeausnehmung (210) ausgeführt ist, die dazu ausgeformt ist, um in der Befestigungsstellung (140) des Befestigungselements (105) einen Schulterabschnitt (315) des Befestigungselements (105) aufzunehmen.

5. Dunstabzugshaubensystem (500) nach einem der vorangegangenen Ansprüche, wobei bei der Aufnahmevorrichtung (100) eine Tiefe der Aufnahmeausnehmung (120) einer Tiefe der Nut (115) entspricht und/oder die Tiefe der Aufnahmeausnehmung (120) größer ist, als eine weitere Tiefe einer weiteren Aufnahmeausnehmung (210) und/oder eine Höhe des Halteelements (125) kleiner ist als zumindest eine Tiefe einer Seitenwand (215) der Nut (115).

6. Dunstabzugshaubensystem (500) nach einem der der vorangegangenen Ansprüche, wobei die Aufnahmevorrichtung (100) zum Befestigen an der Dunstabzugshaube (505) eine Durchgangsöffnung (220) zum Aufnehmen eines Fixierelements ausgeformt, insbesondere wobei die Durchgangsöffnung (220) quer zu der Nut (115) verlaufend angeordnet ist.

7. Dunstabzugshaubensystem (500) nach einem der vorangegangenen Ansprüche, wobei der Winkel zwischen der Aufnahmefläche (300) und der Fixierfläche (305) 75° beträgt.

8. Dunstabzugshaubensystem (500) nach einem der vorangegangenen Ansprüche, bei dem die Aufnahmefläche (300) des Winkelelements an einem freien Ende den Fortsatz (130) ausformt und/oder einen Schulterabschnitt (315) und/oder einen zwischen dem Fortsatz (130) und dem Schulterabschnitt (315) angeordneten Halsabschnitt (320) ausformt, insbesondere wobei sich eine Fortsatzbreite des Fortsatzes (130) von einer Halsbreite des Halsabschnitts (320) und/oder einer Schulterbreite des Schulterabschnitts (315) und/oder die Halsbreite von der Schulterbreite unterscheidet.

## Claims

1. Extractor hood system (500) having an extractor hood (505) and a filter (110), the extractor hood (505) comprising a receiving device (100) which is fixed to the extractor hood (505), the filter (110) comprising a fastening element (105) which is fixed to the filter (110), the fastening element (105) being shaped as an angular element having a receiving surface (300) and a fixing surface (305), **characterised in that** an angle between the receiving surface (300) and the fixing surface (305) is 65° to 85°, the fastening element (105) is shaped so as to have an extension (130) for being received in the receiving device (100), the extension (130) is shaped, at a free end of the receiving surface (300), so as to be guided through a groove (115) in the receiving device (100) along a feed direction (135), and the receiving device (100) is designed and formed for receiving the fastening element (105) and comprises at least the following features:
- a groove (115) through which an extension (130) of the fastening element (105) of the filter (110), which fastening element is or can be fastened to the filter (110), can be guided along a feed direction (135);
- a receiving recess (120) which is connected to the groove (115) and shaped so as to receive the extension (130), after having been guided through, in a fastening position (140) in which the fastening element (105) is fastened in the receiving device (100),
- a retaining element (125) which is located upstream of the receiving recess (120) in the feed direction (135) and is shaped so as to retain the extension (130) received in the receiving recess (120) in the fastening position (140); and
- an insertion opening (200) which is shaped so as to introduce the extension (130) from outside the receiving device (100) into the groove (115);
- the insertion opening (200) is arranged transversely with respect to the groove (115); and
- a stop portion (205) in the region of the insertion opening (200), which stop portion is shaped so as to prevent the extension (130) from sliding out of the groove (115) counter to the feed direction (135).

2. Extractor hood system (500) according to claim 1, the receiving recess (120) being arranged so as to extend transversely with respect to the groove (115), in particular wherein the receiving recess (120) is curved.

3. Extractor hood system (500) according to either of the preceding claims, wherein the insertion opening (200) is arranged at an end of the groove (115) opposite the receiving recess (120).

4. Extractor hood system (500) according to any of the preceding claims, wherein the receiving device (100) is designed so as to have a further receiving recess (210) which is arranged upstream of the retaining element (125) in the feed direction (135), connected to the groove (115), and shaped so as to receive a shoulder portion (315) of the fastening element (105) in the fastening position (140) of the fastening element (105).

5. Extractor hood system (500) according to any of the preceding claims, wherein, in the receiving device (100), a depth of the receiving recess (120) corresponds to a depth of the groove (115) and/or the depth of the receiving recess (120) is greater than a further depth of a further receiving recess (210) and/or a height of the retaining element (125) is smaller than at least a depth of a lateral wall (215) of the groove (115).

6. Extractor hood system (500) according to any of the preceding claims, wherein the receiving device (100), in order to fasten to the extractor hood (505), forms a through-opening (220) for receiving a fixing element, in particular wherein the through-opening (220) is arranged so as to extend transversely to the groove (115).

7. Extractor hood system (500) according to any of the preceding claims, wherein the angle between the receiving surface (300) and the fixing surface (305) is 75°.

8. Extractor hood system (500) according to any of the preceding claims, the receiving surface (300) of the angular element forming the extension (130) at a free end and/or forming a shoulder portion (315) and/or a neck portion (320) arranged between the extension (130) and the shoulder portion (315), in particular wherein an extension width of the extension (130) differs from a neck width of the neck portion (320) and/or a shoulder width of the shoulder portion (315) and/or the neck width differs from the shoulder width.

## Revendications

1. Système de hotte aspirante (500) comportant une hotte aspirante (505) et un filtre (110), la hotte aspirante (505) présentant un dispositif de réception (100) qui est fixé à la hotte aspirante (505), le filtre (110) présentant un élément de fixation (105) qui est fixé au filtre (110), l'élément de fixation (105) étant formé sous la forme d'un élément d'angle comportant une surface de réception (300) et une surface de fixation (305),
**caractérisé en ce**
**qu'**un angle entre la surface de réception (300) et la surface de fixation (305) est de 65° à 85°, que l'élément de fixation (105) est formé avec une extension (130) permettant la réception dans le dispositif de réception (100), que l'extension (130) est formée, au niveau d'une extrémité libre de la surface de réception (300), par une rainure (115) du dispositif de réception (100) le long d'une direction d'avance (135) en vue du guidage, que le dispositif de réception (100) est conçu et agencé pour recevoir l'élément de fixation (105) et présente au moins les caractéristiques suivantes :
- une rainure (115) à travers laquelle une extension (130) de l'élément de fixation (105) du filtre (110) fixé ou pouvant être fixé au filtre (110) peut être passée le long d'une direction d'avance (135) ;
- un évidement de réception (120) relié à la rainure (115) et formé pour recevoir l'extension (130) après son passage dans une position de fixation (140) dans laquelle l'élément de fixation (105) est fixé dans le dispositif de réception (100) ;
- un élément de maintien (125) qui est monté en amont de l'évidement de réception (120) dans la direction d'avance (135) et qui est formé pour maintenir l'extension (130) reçue dans l'évidement de réception (120) dans la position de fixation (140) ; et
- une ouverture d'insertion (200) qui est formée pour insérer l'extension (130) depuis l'extérieur du dispositif de réception (100) dans la rainure (115) ;
- l'ouverture d'insertion (200) qui est disposée transversalement à la rainure (115) ; et
- une section de butée (205) dans la région de l'ouverture d'insertion (200), laquelle est formée pour empêcher l'extension (130) de glisser hors de la rainure (115), à l'encontre de la direction d'avance (135).

2. Système de hotte aspirante (500) selon la revendication 1, dans lequel l'évidement de réception (120) est disposé de façon à s'étendre transversalement à la rainure (115), en particulier en ce que l'évidement de réception (120) est formé de façon incurvée.

3. Système de hotte aspirante (500) selon l'une des revendications précédentes, dans lequel l'ouverture d'insertion (200) est disposée au niveau d'une extrémité de la rainure (115) opposée à l'évidement de réception (120).

4. Système de hotte aspirante (500) selon l'une des revendications précédentes, dans lequel le dispositif de réception (100) est réalisé avec un autre évidement de réception (210) monté en amont de l'élément de maintien (125) dans la direction d'avance (135), relié à la rainure (115) et formé pour recevoir une section d'épaulement (315) de l'élément de fixation (105) dans la position de fixation (140) de l'élément de fixation (105).

5. Système de hotte aspirante (500) selon l'une des revendications précédentes, dans lequel, dans le dispositif de réception (100), une profondeur de l'évidement de réception (120) correspond à une profondeur de la rainure (115) et/ou la profondeur de l'évidement de réception (120) est supérieure à une autre profondeur recevant un autre évidement (210) et/ou une hauteur de l'élément de maintien (125) est inférieure à au moins une profondeur d'une paroi latérale (215) de la rainure (115).

6. Système de hotte aspirante (500) selon l'une des revendications précédentes, dans lequel le dispositif de réception (100) permettant la fixation à la hotte aspirante (505) est formé avec une ouverture traversante (220) permettant de recevoir un élément de fixation, en particulier en ce que l'ouverture de passage (220) est disposée de façon à s'étendre transversalement à la rainure (115).

7. Système de hotte aspirante (500) selon l'une des revendications précédentes, dans lequel l'angle entre la surface de réception (300) et la surface de fixation (305) est de 75°.

8. Système de hotte aspirante (500) selon l'une des revendications précédentes, dans lequel la surface de réception (300) de l'élément d'angle forme l'extension (130) au niveau d'une extrémité libre et/ou forme une section d'épaulement (315) et/ou forme une section de cou (320) disposée entre le prolongement (130) et la section d'épaulement (315), en particulier en ce qu'une largeur d'extension de l'extension (130) diffère d'une largeur de cou de la section de cou (320) et/ou d'une largeur d'épaulement de la section d'épaulement (315) et/ou en ce que la largeur de cou diffèrent de la largeur d'épaulement.
